# EUROPEAN PATENT SPECIFICATION

(11) **EP 0 883 855 B1**
(45) Date of publication and mention of the grant of the patent: **08.12.1999**
(21) Application number: 97904535.8
(22) Date of filing: 27.02.1997
(51) Int. Cl.: G06K 7/06

(54) **APPARATUS FOR THE ELECTRICAL CONNECTION OF A CHIP CARD TO A PRINTED CIRCUIT BOARD**
VORRICHTUNG ZUR ELEKTRISCHEN VERBINDUNG EINER CHIP-KARTE MIT EINER LEITERPLATTE
DISPOSITIF SERVANT A CONNECTER ELECTRIQUEMENT UNE CARTE A PUCE A UNE PLAQUETTE A CIRCUITS IMPRIMES

(30) Priority: 29.02.1996 DE 19607738; 20.12.1996 EP 96120693
(43) Date of publication of application: 16.12.1998
(73) Proprietor: THE WHITAKER CORPORATION, Wilmington, Delaware 19808 (US)
(72) Inventor: SOES, Lucas, NL-5248 BB Rosmalen (NL); VAN DER STEEN, Hendrikus, Petrus, Gijsbertus, NL-5275 HB Den Dungen (NL)
(74) Representative: Heinz-Schäfer, Marion
(86) International application number: IB9700179
(87) International publication number: WO9732275

(56) References cited:
- WO-A-95/18421
- DE-U- 9 400 349
- US-A- 4 623 207

## Description

The invention relates to an arrangement for the electrical connection of the contact points of a chip card, in particular a SIM card, to the contact points of a printed circuit board, in particular for a portable, wire-free telephone.

SIM cards are already known. The abbreviation SIM stands for Subscriber Identification Module. The SIM card contains a module which has stored the identification data of a subscriber (for example the telephone number of a telephone subscriber) in an electronic way.

WO 92/046 88 and WO 94/153 13 disclose arrangements for the electrical connection of contact points of a chip card to the contact points of a printed circuit board. Because of the arrangement of the contact points on the SIM card, an arrangement cf contact points in two rows is prescribed. Contacts are provided which, proceeding from these two rows of contact points, connect corresponding contact points on the printed circuit board to them. The contacts are inlaid in a housing and, for example, injection-moulded into the latter. It is known to solder on the contacts on the printed circuit board. It is further known for the housing to have a base plate which in turn has apertures which are arranged in such a way that the arrangement coincides with the arrangement of contact points on the chip card with which contact is to be made.

A contacting arrangement for a chip card is likewise disclosed by US 4,735,578. This contacting arrangement has a housing and contacts bent in a U-shape, which make contact on one side with the chip card and on the other side can be connected to film conductors, for example by means of an insulation displacement terminal contact. While one leg of the U-shaped contact, with which contact is made with the chip card, is designed to be springy, the other leg is fixed between two housing parts.

US-A-4,623,207 discloses an apparatus for the electrical connection of two printed circuit boards, comprising a housing with a base plate having apertures arranged on the base plate to coincide with the arrangement of contact points on the upper printed circuit board with which contact is to be made and contacts that are bent substantially in U-shape and have a first spring leg to make contact with the upper printed circuit board and a second spring leg to make contact with the lower circuit board and which have a central region for fixing on the housing, where the first spring legs are arranged substantially in parallel to the base plate and reach through the apertures with the contact region, with the central, region of the contacts extends substantially at right angles to the base plate. The spring force of the U-shaped ccntacts is used to fix them to the housing and to make contact to the two opposing printed circuit boards.

WO-A-95/18421 shows an electrical connection apparatus making contact between a chip card and a circuit board. The connector comprises a support of insulating material and a plurality of electrical leads configured like elastical deformable blades comprising a first curved contact extremity in contact with one of the zones of the card and a medium link portion for linking the plate to the support and a second connection extremity. Each plate comprises means for fixing the plate to the support, said means comprising a side peg shaped as a harpoon which is received in a corresponding slot of the support.

WO-A-95/17774 discloses a dual beam contact. The contact is used for coupling elements on opposite sides of a dividing element and preferably comprises a single piece of metal to provide a contact portion on either side of the dividing element. Each beam of the dual beam contact can be specifically shaped or formed to provide the preferred contact pressure depending upon the application of the dual beam contact. The dual beam contact is basically U-shaped and an attachment member in the form of two arms which are fixed at the same height to one of the beams or spring legs is included. This attachment member has the disadvantage that it is connected to one beam and makes the one beam much stiffer than the other one because of this.

It is the object of the invention to specify an arrangement for the electrical connection of a chip card to a printed circuit board which produces a reliable connection. The object is achieved by means of an arrangement having the features of Patent Claim 1. Advantageous developments are specified in the subclaims.

According to the invention, the arrangement has a housing with a base plate, apertures being provided in the base plate and being arranged in such a way that the arrangement coincides with the arrangement of contact points on the chip card with which contact is to be made; in addition, contacts are provided which are bent substantially in a U-shape, each having a first spring leg to make contact with the chip card, and each having a second spring leg to make contact with the circuit board, and each having a central region for fixing on the housing; furthermore, the first spring legs are arranged substantially parallel to the base plate and reach through the apertures with a contact region, and the central region of the contacts extends substantially at right angles to the base plate. In the arrangement the central region is also of U-shaped design, the plane in which the U lies being aligned parallel to the base plate. This results in mobility of the contact at the fastening point in the direction in which the legs of the contact extend.

In order to fix the contacts, it is of special advantage if grooves are provided in the housing, in which grooves the central region of the contact is fitted. In order to fix the central region, it is proposed to retain the latter by means of a press fit in the groove. In order to make contact both with the circuit board and with the chip card, it has proven to be especially advantageous if the contact regions are designed on the legs as a bend. A particularly simple manufacturing method for the contacts is achieved by the contacts being stamped from a metal sheet and subsequently bent.

The housing is advantageously designed substantially like a trough, the base plate forming the bottom of the trough and the grooves being arranged in a side wall. This results in the housing being particularly simple to manufacture. It is also possible for the housing to be designed like a trough having a web, which bears grooves on both sides for fastening the contacts, in the centre of the trough. The trough-like design also has the advantage that, if the contacts are appropriately adapted, it is possible to provide components on the circuit board under the housing between the contact points on the circuit board. This is achieved by the web in the trough-like housing being designed to be appropriately low and the side walls appropriately higher.

Furthermore, in the arrangement according to the invention it is especially advantageous that it can be designed, with slight changes, both as a surface-mountable part (SMD Surface Mounting Device), which is soldered on a circuit board, and as a part which is pressed onto the circuit board. The contact pressure in the case of the last variant is produced solely on the basis of the U-shaped design of the contacts.

Furthermore, it is of particular advantage that stops are arranged in the housing, opposite the side wall or opposite the web having the grooves for fastening the contacts. These stops are provided in such a way that when a chip card is introduced or if there is any other pressure on the contacts, these move into the interior of the housing and strike against the stop as soon as they run flush at the contacting region with the surface of the base plate of the housing.

As a result of the free ends of the first spring legs striking the stops, the situation is avoided where the legs are overloaded, and thus functional impairment is prevented.

Furthermore, it is of particular advantage that the second spring legs of the contacts have contact regions which are produced by rolling up the second free end.

Furthermore, it is of particular advantage that the first legs have, in the region of the contact regions, an indentation, that is to say are designed to be slightly curved in cross-section. This particular design leads to a stiffening and therefore to increased strength of the contact legs. In addition, the slightly curved design of the contact regions means that the chip card is not damaged even if it is pushed onto the arrangement laterally over the contacts, that is to say obliquely or at right angles to the direction of the spring legs.

An exemplary embodiment of the invention will be described using the figures, in which:
Figure 1 shows a chip card connector in a perspective view, said card being pressed by means of a housing onto the printed circuit board;
Figure 2 shows a side view of the connector;
Figure 3 shows a front view of the connector;
Figure 4 shows a cross-section through a chip card connector;
Figure 5 shows a perspective view of a surface-mountable chip card connector;
Figure 6 shows a corresponding side view;
Figure 7 shows a corresponding front view;
Figure 8 shows a perspective view of a surface-mountable connector having a cut-out for components mounted on the printed circuit board;
Figure 9 shows a corresponding side view;
Figure 10 shows a corresponding front view;
Figure 11 shows a top view of a contact of the arrangement shown in Figures 5 to 7;
Figure 12 shows a corresponding side view;
Figure 13 shows a corresponding front view;
Figure 14 shows a top view of a contact for the arrangement shown in Figures 8 to 10;
Figure 15 shows a corresponding side view;
Figure 16 shows a corresponding front view;
Figure 17 shows a corresponding layout;
Figure 18 shows a cross-section through a chip card connector with contacts not yet inserted; and
Figure 19 shows the chip card connector with loaded contacts.

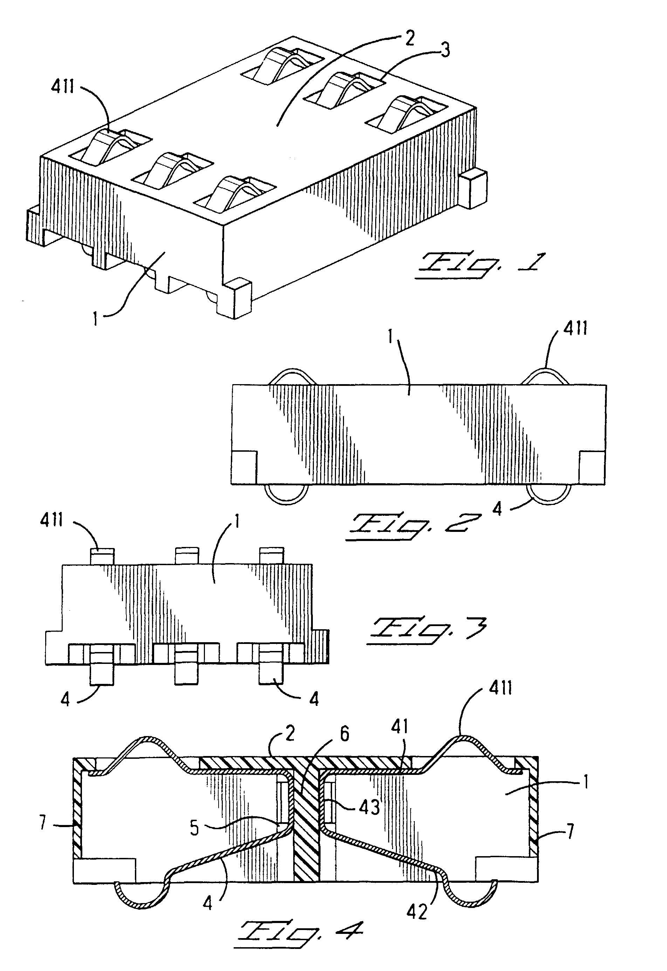

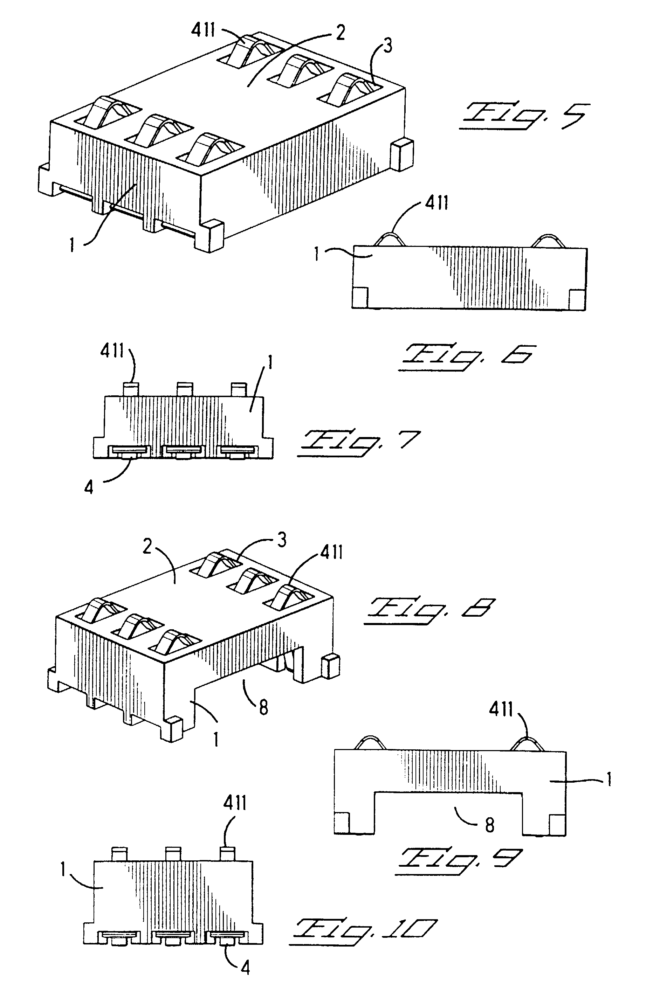

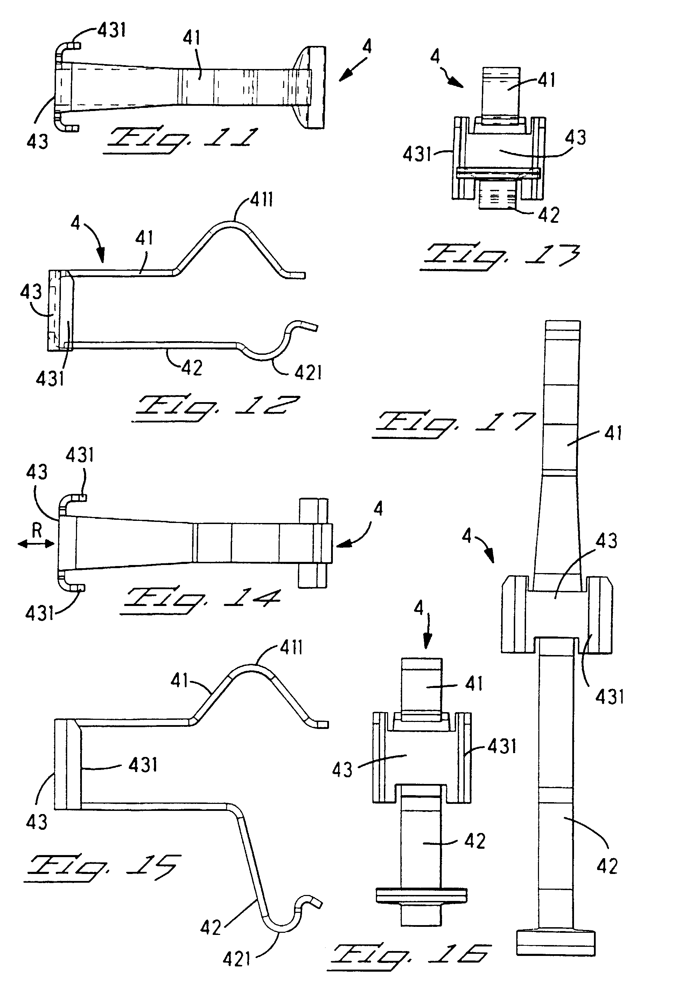

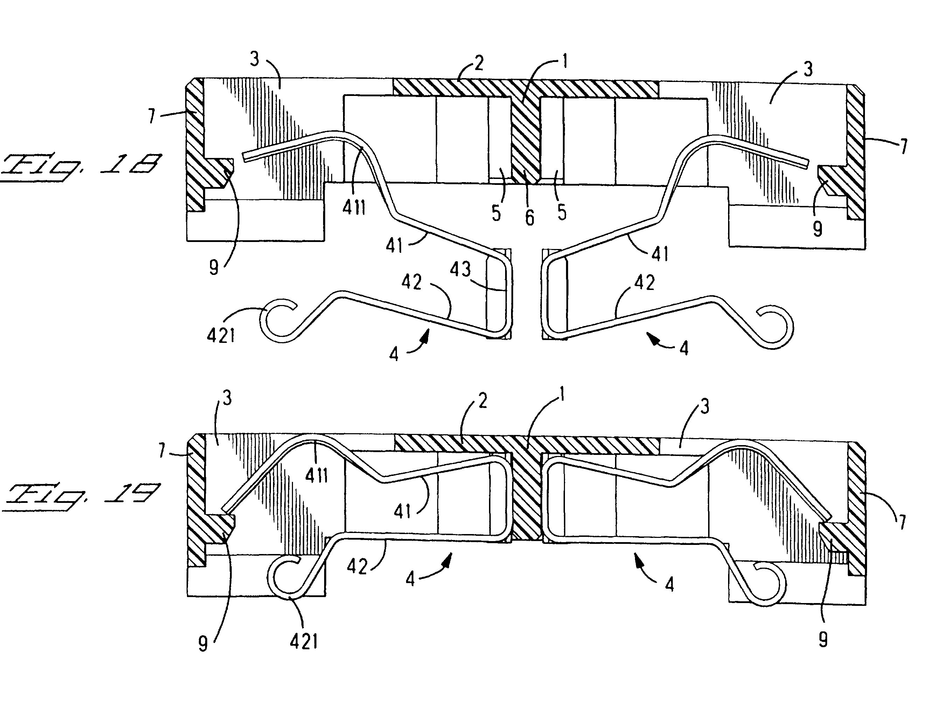

Shown in Figures 1 to 3 is an arrangement for the electrical connection of a chip card, in particular a SIM card, which is pressed onto a printed circuit board by means of a housing in which this printed circuit board is fastened. The arrangement itself has a housing 1 with a base plate 2. Arranged in the base plate 2 are two rows of apertures 3 which are arranged such that the arrangement of the apertures 3 coincides with the arrangement of the contact points on the chip card with which contact is to be made. Provided in the housing 1 are contacts 4, an independent contact 4 being provided for each aperture 3 and the contact 4 penetrating the aperture 3 with a contacting region 411 in such a way that contact is made with the chip card by means of the contacting regions 411. On the other side of the housing 1, corresponding contacting regions of the contacts 4 are provided for the printed circuit board.

Shown in Figure 4 in schematic form is the construction of the arrangements shown in Figures 1 to 3 and also in Figures 5 to 7 and 8 to 10. The housing 1 is configured like a trough and comprises a base plate 2, side walls 7 and a central web 6. The base plate 2 has the apertures 3 already described above. Arranged on the web 6 are grooves 5 running at right angles to the base plate. The contacts 4 are retained in these grooves. The contacts 4 are designed as follows. They are substantially U-shaped, having a first spring leg 41 and a second spring leg 42, and a central region 43. The central region 43 is fixed in the groove 5. The two spring legs 41 and 42 each have contacting regions 411 and 421. The first spring leg 41 is arranged parallel to the base plate 2. The central region 43 runs approximately at right angles to the base plate 2. The central region 43 may, for example, be configured such that it is retained in the groove 5 by a press fit. This is particularly advantageous since it is particularly easy to manufacture. The angle between the second leg 42 and the central region 43 may be different, depending on the application. This depends, firstly, on the height between the chip card and the circuit board with which contact is to be made, and also on whether further electric or electronic components are intended to be mounted on the circuit board with which contact is to be made, under the housing 1. In this case it is practical to provide a cut-out in the housing 1, as can be seen in Figures 8 and 10. The shape of the spring leg 42 must, of course, also be matched to this cut-out 8.

Such an arrangement, in which the cut-out 8 can easily be seen, is shown in Figures 8 to 10.

The examples shown in Figures 5 to 10 correspond substantially to the example shown in Figures 1 to 3. However, since the arrangements shown here are configured to be surface mountable, the contacts are designed somewhat differently, since they are soldered to the circuit board. The design of the contacts relating to the examples of Figures 5 to 7 and, respectively, 8 to 10 are shown in Figures 11 to 13 and, respectively, 14 to 16. The contacts of Figures 14 to 16 differ from those of Figures 11 to 13 in that in this exemplary embodiment a cut-out is provided and the second spring leg must be designed appropriately.

There now follows a description of the contacts, this description applying to Figures 11 to 13 and, respectively, 14 to 16 to the same extent. The contacts 4 are constructed to be substantially U-shaped, the first spring leg 41 having contact regions 411, the second spring leg 42 having contact regions 421 and a central region 43 being arranged between the spring legs. Depending on the application, the second spring leg is designed to be bent over in certain circumstances. The design of the central region 43, which serves for fixing in the housing, is particularly important. The central region 43 has two arms 431 which are fastened on opposite sides of the central region. The arms are bent over, so that the arms 431 form a U-shape with the central region 43. This U-shape is pressed into the grooves of the housing. Although the side arms are rigidly anchored in the housing, movement of the central region 43 in the direction R, as indicated in Figure 14, is possible to a small extent. This spring effect contributes substantially to the good functioning of the contacts. The layout of a stamped contact is shown in Figure 17. The contact may advantageously be manufactured by stamping and bending.

A further exemplary embodiment of the invention is shown in Figures 18 and 19. Firstly, in Figure 18 the trough-like housing 1 with the base plate 2, the side walls 7 and the central web 6 can be seen. The base plate has apertures 3. Grooves 5 running at right angles to the base plate 2 are provided on the web on opposite sides. Provided on the side walls are stops 9. The precise function of these stops will be explained together with Figure 19. Furthermore, two contacts 4 are shown in Figure 18. The contacts each have first legs 41 and second legs 42, which form the legs of a U whose central region 43 is likewise of U-shaped design and is fastened in the groove 5 in the housing 1. It can be seen that the legs 41 and 42 have an angle of bend in relation to the central region 43 which is larger than the angle they have after they have been inserted into the housing. As a result of the insertion of the contacts 4 into the housing 1, therefore, the corresponding adaptation of the angles of bend to the conditions of the housing is also undertaken. It can be seen that the first leg 41 has, in the region of the contacting region 411, an indentation, as a result of which it is of curved design in cross-section. The contacting region 421 of the second leg 42 is formed by rolling up the free end of this leg.

As a result of the special design of the housing and of the contacts, it is possible to mount still further electronic or electric components on the printed circuit board, on which the housing with the contacts is also mounted, under the web 6 of the housing.

In Figure 19, the contacts 4 from Figure 18 have now been inserted appropriately into the housing 1. It can be seen that the free ends of the first legs 41 are resting on the stops 9. At the same time, the contacting regions 411 are located in a plane with the surface with the base plate 2. This representation corresponds to the loaded state, in which pressure is being exerted on the first legs. By means of the stops 9, overloading of the first legs is avoided.

## Claims

1. An apparatus for the electrical connection of a chip card, in particular a SIM card, to a printed circuit board, comprising: a housing (1) with a base plate (2) having, apertures (3) arranged in the base plate (2) to coincide with the arrangement of contact points on the chip card with which contact is to be made; and contacts (4) that are bent substantially in a U-shape and have a first spring leg (41) to make contact with the chip card, have a second spring leg (42) to make contact with the circuit board, and have a central region (43) for fixing on the housing (1), where the first spring legs (41) are arranged substantially parallel to the base plate (2) and reach through the apertures (3) with a contact region (411), characterized in that the central region (43) of the contacts (4) extends substantially at right angles to the base plate (2) and in that the central region (43) has two arms (431) which are fixed at the same height to the central region (43) on opposite sides of the latter, using one end of the arm, and which arms are bent over such that a U-shape is produced which is arranged in a plane which extends substantially parallel to the base plate (2) and that the U-shaped arms (431) of the central regions (43) are pressed into grooves (5) in the housing (1).

2. The Apparatus according to Claim 1, wherein the grooves (5), into each of which the central region (43) of a contact (4) engages, extend parallel in the housing (1), at a right angle to the base plate (2) and below the latter.

3. The Apparatus according to Claim 1, wherein the contact regions (411) are designed as a bend.

4. The Apparatus according to Claim 1, wherein the housing (1) is designed like a trough, the base plate (2) forming the bottom of the trough and the grooves (5) being arranged in a side wall.

5. The Apparatus according to Claim 1, wherein the housing (1) is designed like a trough, the base plate (2) forming the bottom of the trough and a web (6), which bears grooves (5) on both sides, being provided in the centre of the trough.

6. The Apparatus according to Claim 1, wherein two rows of apertures (3) are provided,

7. The Apparatus according to Claim 6, wherein the contacts (4) assigned to different rows of apertures (3) are arranged with the central regions (43) relating to one another.

8. The Apparatus according to Claim 1, wherein the contacts (4) and the housing (1) are designed such that an electrical or electronic component may be fitted between the contact points on the circuit board.

9. The Apparatus according to Claim 8, characterized in that the second leg (42) of the contacts (4) is bent over.

10. The Apparatus according to Claim 8, wherein the web (6) is set back in relation to the side walls (7), parallel thereto, of the trough-like housing (1).

11. The Apparatus according to Claim 1, wherein the contact regions of the second legs (42) are suitable for soldering on the printed circuit board.

12. The Apparatus according to Claim 1, wherein the second legs (42) are bent over in such that they ensure contact by spring force.

13. The Apparatus according to Claim 1, wherein stops (9) are provided, on that wall of the housing (1) opposite the grooves, in such a way that the free ends of the first spring legs (41) strike against said stops.

## Patentansprüche

1. Vorrichtung zur elektrischen Verbindung einer Chip-Karte, insbesondere einer SIM-Karte, mit einer Leiterplatte, die aufweist: ein Gehäuse (1) mit einer Basisplatte (2), die Öffnungen (3) aufweist, die in der Basisplatte (2) angeordnet sind, um mit der Anordnung von Kontaktpunkten auf der Chip-Karte übereinzustimmen, mit der ein Kontakt hergestellt werden soll; und Kontakte (4), die im wesentlichen in einer U-Form gebogen sind und aufweisen: einen ersten Federschenkel (41), um einen Kontakt mit der Chip-Karte herzustellen; einen zweiten Federschenkel (42), um einen Kontakt mit der Leiterplatte herzustellen; und einen mittleren Bereich (43) für das Befestigen am Gehäuse (1), wobei die ersten Federschenkel (41) im wesentlichen parallel zur Basisplatte (2) angeordnet sind und durch die Öffnungen (3) bis zu einem Kontaktbereich (411) reichen; dadurch gekennzeichnet, daß sich der mittlere Bereich (43) der Kontakte (4) im wesentlichen unter rechtem Winkel zur Basisplatte (2) erstreckt; und dadurch, daß der mittlere Bereich (43) zwei Arme (431) aufweist, die in der gleichen Höhe am mittleren Bereich (43) auf gegenüberliegenden Seiten des letzteren befestigt sind, wobei ein Ende des Armes benutzt wird, und wobei die Arme so umgebogen sind, daß eine U-Form erhalten wird, die in einer Ebene angeordnet ist, die sich im wesentlichen parallel zur Basisplatte (2) erstreckt, und daß die U-förmigen Arme (431) der mittleren Bereiche (43) in Nuten (5) im Gehäuse (1) gepreßt werden.

2. Vorrichtung nach Anspruch 1, bei der sich die Nuten (5), in die jeweils der mittlere Bereich (43) eines Kontaktes (4) eingreift, parallel im Gehäuse (1) unter einem rechten Winkel zur Basisplatte (2) und unterhalb der letzteren erstrecken.

3. Vorrichtung nach Anspruch 1, bei der die Kontaktbereiche (411) als eine Biegung konstruiert sind.

4. Vorrichtung nach Anspruch 1, bei der das Gehäuse (1) wie eine Wanne konstruiert ist, bei der die Basisplatte (2) den Boden der Wanne bildet, und bei der die Nuten (5) in einer Seitenwand angeordnet sind.

5. Vorrichtung nach Anspruch 1, bei der das Gehäuse (1) wie eine Wanne konstruiert ist, bei der die Basisplatte (2) den Boden der Wanne bildet, und bei der ein Steg (6), der Nuten (5) auf beiden Seiten trägt, in der Mitte der Wanne bereitgestellt wird.

6. Vorrichtung nach Anspruch 1, bei der zwei Reihen von Öffnungen (3) bereitgestellt werden.

7. Vorrichtung nach Anspruch 6, bei der die Kontakte (4), die verschiedenen Reihen von Öffnungen (3) zugeordnet sind, so angeordnet sind, daß die mittleren Bereiche (43) eine Beziehung zueinander aufweisen.

8. Vorrichtung nach Anspruch 1, bei der die Kontakte (4) und das Gehäuse (1) so konstruiert sind, daß ein elektrisches oder elektronisches Bauteil zwischen die Kontaktpunkte auf der Leiterplatte eingepaßt werden kann.

9. Vorrichtung nach Anspruch 8, dadurch gekennzeichnet, daß der zweite Schenkel (42) der Kontakte (4) umgebogen ist.

10. Vorrichtung nach Anspruch 8, bei der der Steg (6) in Beziehung zu den Seitenwänden (7) des wannenartigen Gehäuses (1), parallel dazu, zurückgesetzt ist.

11. Vorrichtung nach Anspruch 1, bei der die Kontaktbereiche der zweiten Schenkel (42) für ein Löten auf die Leiterplatte geeignet sind.

12. Vorrichtung nach Anspruch 1, bei der die zweiten Schenkel (42) so umgebogen sind, daß sie einen Kontakt durch Federkraft sichern.

13. Vorrichtung nach Anspruch 1, bei der Anschläge (9) an jener Wand des Gehäuses (1), die den Nuten gegenüberliegt, so vorhanden sind, daß die freien Enden der ersten Federschenkel (41) gegen die Anschläge stoßen.

## Revendications

1. Dispositif destiné à assurer la connexion électrique entre une carte à puce, en particulier une carte SIM, et une plaquette de circuits imprimés, comprenant: un boîtier (1) avec une plaque de base (2) comportant des ouvertures (3) agencées dans la plaque de base (2), destinées à coïncider avec l'agencement des doigts de contact sur la carte à puce avec laquelle le contact doit être établi; et des contacts (4) pliés pratiquement en U et comportant une première branche élastique (41), destinée à établir le contact avec la carte à puce, et une deuxième branche de contact (42), destinée à établir le contact avec la plaquette de circuits, et comportant une région centrale (43) en vue de la fixation sur le boîtier (1), les premières branches élastiques (42) étant agencées de façon pratiquement parallèle à la plaque de base (2) et atteignant une région de contact (411) à travers les ouvertures (3), caractérisé en ce que la région centrale (43) des contacts (4) s'étend pratiquement à angles droits par rapport à la plaque de base (2) et en ce que la région centrale (43) comporte deux bras (431) fixés au niveau de la même hauteur que la région centrale (43), sur les côtés opposés de celle-ci, par l'intermédiaire d'une extrémité du bras, ces bras étant repliés de sorte à établir une forme en U agencée dans un plan s'étendant de façon pratiquement parallèle à la plaque de base (2), et en ce que les bras en U (431) des régions centrales (43) sont pressés dans des rainures (5) dans le boîtier (1).

2. Dispositif selon la revendication 1, dans lequel les rainures (5) dans chacune desquelles s'engage la région centrale (43) d'un contact (4) s'étendent parallèlement dans le boîtier (1), à angle droit par rapport à la plaque de base (2) et au-dessous de celle-ci.

3. Dispositif selon la revendication 1, dans lequel les régions de contact (411) ont la forme d'un coude.

4. Dispositif selon la revendication 1, dans lequel le boîtier (1) a une forme en auge, la plaque de base (2) formant le fond de l'auge et les rainures (5) étant agencées dans une paroi latérale.

5. Dispositif selon la revendication 1, dans lequel le boîtier (1) a une forme en auge, la plaque de base (2) formant le fond de l'auge, et une bande (6) supportant des rainures (5) sur les deux côtés étant agencée dans le centre de l'auge.

6. Dispositif selon la revendication 1 comportant deux rangées d'ouvertures (3).

7. Dispositif selon la revendication 6, dans lequel les contacts (4) affectés aux différentes rangées d'ouvertures (3) sont agencés de sorte que les régions centrales (43) correspondent.

8. Dispositif selon la revendication 1, dans lequel les contacts (4) et le boîtier (1) sont conçus de sorte qu'un composant électrique ou électronique peut être ajusté entre les doigts de contact sur la plaquette de circuits.

9. Dispositif selon la revendication 8, caractérisé en ce que la deuxième branche (42) des contacts (4) est repliée.

10. Dispositif selon la revendication 8, dans lequel la bande (6) est en retrait par rapport aux parois latérales (7) du boîtier en auge (1) et parallèle à celles-ci.

11. Dispositif selon la revendication 1, dans lequel les régions de contact des deuxièmes branches (42) peuvent être soudées sur la plaquette de circuits imprimés.

12. Dispositif selon la revendication 1, dans lequel les deuxièmes branches (42) sont repliées de sorte à assurer le contact par une force élastique.

13. Dispositif selon la revendication 1, comportant des butoirs (9) sur la paroi du boîtier (1) opposée aux rainures, de sorte que les extrémités libres des premières branches élastiques (41) heurtent lesdits butoirs.
